# EUROPÄISCHE PATENTSCHRIFT

(11) **EP 0 514 708 B1**
(45) Veröffentlichungstag und Bekanntmachung des Hinweises auf die Patenterteilung: **18.09.1996**
(21) Anmeldenummer: 92107660.0
(22) Anmeldetag: 06.05.1992
(51) Int. Cl.: H05K 5/00

(54) **Schutzvorrichtung für Schaltungsteile und/oder Daten in einem elektrotechnischen Gerät**
Safety guard for circuit components and/or data in an electrotechnical apparatus
Dispositif de sécurité pour des pièces de circuit et/ou des données dans un appareil électro-technique

(30) Priorität: 14.05.1991 DE 4115703
(43) Veröffentlichungstag der Anmeldung: 25.11.1992
(73) Patentinhaber: Siemens Nixdorf Informationssysteme Aktiengesellschaft, D-33102 Paderborn (DE)
(72) Erfinder: Depta, Robert, Dipl.-Phys., W-8900 Augsburg 21 (DE); Grandy, Josef, Dipl.-Ing. (FH), W-8901 Rehling (DE)
(74) Vertreter: Fuchs, Franz-Josef, Dr.-Ing.

(56) Entgegenhaltungen:
- DE-A- 3 023 427
- DE-A- 3 624 718
- DE-A- 3 732 825
- DE-A- 3 836 480

## Beschreibung

Die Erfindung betrifft eine Schutzvorrichtung für Schaltungsteile und/oder Daten in einem elektrotechnischen Gerät nach dem Oberbegriff des Anspruchs 1.

Der Gegenstand der vorliegenden Erfindung findet in Geräten Verwendung, die geheimzuhaltende Schaltungen und/oder Speicherinhalte enthalten. Solche Geräte verwendet man beispielsweise im militärischen Bereich, im Bankwesen und ganz allgemein im Bereich der elektrischen oder optischen Übertragung von personenbezogenen oder sonstigen zu schützenden Daten. Häufig sind in solchen Geräten Chiffrierschlüssel gespeichert oder Verschlüsselungsalgorithmen durch Schaltungsanordnungen realisiert.

Zum Schutz der sicherheitsrelevanten Gerätebestandteile besteht beispielsweise die Möglichkeit, diese Geräte nur unter Aufsicht von Sicherheitspersonal zu verwenden und die Geräte bei Nichtbenutzung beispielsweise in einem Tresor wegzuschließen. Da dies jedoch insbesondere bei häufigerer Nutzung wenig praktikabel ist, werden andere Vorkehrungen getroffen.

Aus einem Prospekt der Firma GAO mbH mit Titel "EFT-POS-Terminal" ist bekannt, die sicherheitsrelevanten Bestandteile eines Gerätes mit einer Vergußmasse zu überdecken, das Gerät vollständig mit einem Gehäuse zu umschließen und durch einen Lichtsensor sicherzustellen, daß die Chiffrierschlüssel bei Einfall von Licht in das Gehäuse gelöscht werden. Dies setzt allerdings voraus, daß das Gehäuse auch an seinen Aussparungen und Kanten vollkommen lichtundurchlässig ausgeführt sein muß. Darüber hinaus ist der Lichtsensor immer dann nicht wirksam, wenn auf ihn Licht mit einer Wellenlänge auftrifft, bei der er nicht sensitiv ist.

Ferner ist aus der DE 30 23 427 A1 bekannt, in die Gehäusewände einzelne Drähte einzugießen. Eine Unterbrechung der Drähte führt zum Unbrauchbarmachen oder Löschen gespeicherter Daten. Die Drähte verlaufen innerhalb der Gehäusewände in zufälligen Bahnen. Um diese Bahnen gegen Ausspähen sicher zu machen, muß die Außenwand des Gehäuses mit einer Metallschicht überzogen sein.

Der Erfindung liegt die Aufgabe zugrunde, eine Schutzvorrichtung in der Weise auszubilden, daß ein möglichst unüberwindbarer Schutz gegen Ausspähung und Veränderung von Schaltungsteilen und/oder Daten in einem elektrotechnischen Gerät, das von einem Gehäuse umgeben ist, gewährleistet ist, ohne daß zusätzliche Mittel notwendig sind, die die Schutzvorrichtung gegen Unwirksamkeit sichern.

Diese Aufgabe wird erfindungsgemäß durch die in Anspruch 1 angegebenen Merkmale gelöst.

Durch die erfindungsgemäße Anordnung des/der elektrischen Leiter(s) entfällt für einen möglichen Betrüger die Möglichkeit, an das Gerät durch vorheriges Ausspähen der Positionen des/der elektrischen Leiter(s) - am Leiter vorbei - heranzukommen. Es ist also auch keine Metallisierung auf der Außenseite des Gehäuses notwendig. Ein weiterer Vorteil ergibt sich durch die Verwendung der Auswerteschaltung. Die Auswerteschaltung kann so ausgestaltet sein, daß sie Unterbrechungen, Kurzschlüsse, Temperaturänderung etc. erkennen kann und abhängig davon, welche physikalische Änderung vorliegt, wahlweise Schaltungsteile zerstören, Speicherinhalte löschen oder Speicherinhalte unbrauchbar machen kann.

Besondere Weiterbildungen und Ausgestaltungen der Erfindung sind in den Unteransprüchen angegeben.

Ein Ausführungsbeispiel der Erfindung wird anhand der Zeichnung erläutert. Es zeigen
FIG 1 ein zweiteiliges Gehäuse mit eingelegter Folie,
FIG 2 eine Schnittdarstellung der Berührungsflächen zwischen den einzelnen Gehäuseteilen und
FIG 3 eine Schnittdarstellung mehrerer Leiterlagen.

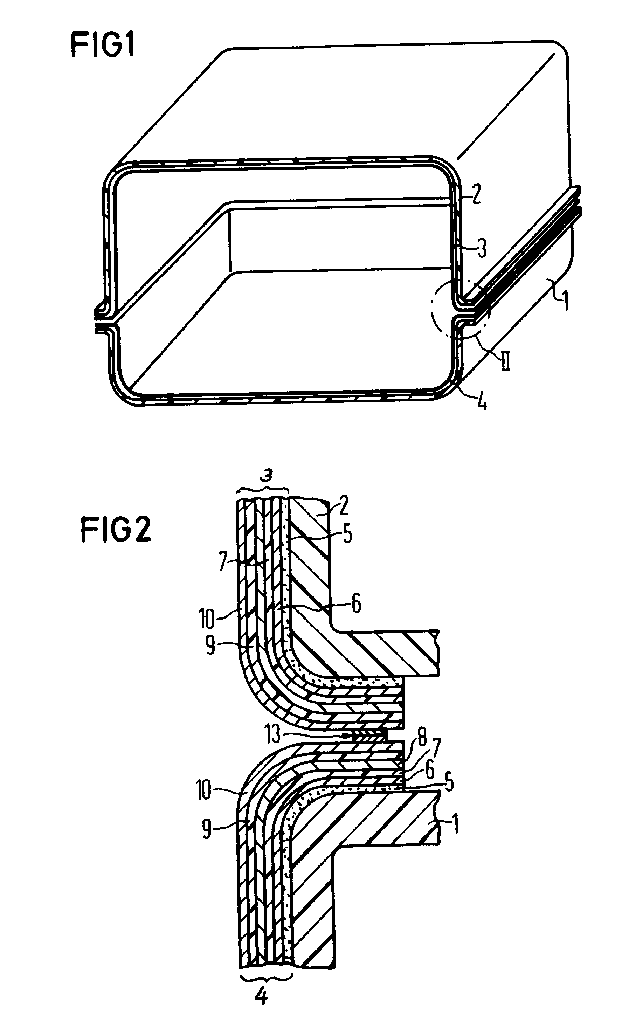

FIG 1 zeigt die perspektivische Darstellung eines quaderförmigen, zweiteiligen geschlossenen Gehäuses, bestehend aus einem Gehäuseboden 1 und einem Gehäusedeckel 2. Die Berührungsflächen der beiden Gehäuseteile 1, 2 sind durch flanschartiges Ausbilden der Gehäusewände vergrößert. Die gesamte Innenfläche der beiden Gehäuseteile 1, 2 ist jeweils einschließlich der Berührungsfläche mit einer flexiblen Leiterplatte 3, 4 ganzflächig ausgelegt. Die flexible Leiterplatte ist mit den Gehäuseteilen 1, 2 ganzflächig durch Kleben verbunden.

Die flexible Leiterplatte 3, 4 ist ein praktikables Mittel, einen elektrischen Leiter ganzflächig um ein Gerät herumzuführen. Von besonderem Vorteil ist, daß die Leiter in herkömmlicher Technologie einfach auf eine Trägerfolie 7 aufgebracht werden können. Es besteht jedoch auch die Möglichkeit, auf eine flexible Leiterplatte 3 zu verzichten und die Leiter unmittelbar in den Gehäusewänden oder auf der Gehäuseinnenfläche aufzubringen.

In FIG 2 ist der Bereich um die Berührungsflächen zwischen den Gehäuseteilen 1, 2 vergrößert dargestellt. Insbesondere sind die auf jedes Gehäuseteil 1, 2 aufgeklebten flexiblen Leiterplatten 3, 4 und jeweils eine Kontaktstelle 13 gezeigt. Direkt an der Gehäuseinnenfläche erkennt man eine Klebeschicht 5. Darauf folgt eine Schirmlage 6, die aus überkreuzten Leitern besteht und mit der Gerätemasse verbunden ist. An diese Schirmlage 6 schließt sich eine Trägerfolie 7 an. Auf diese Trägerfolie 7 ist eine erste Leiterlage 8 und eine zweite Leiterlage 10 aufgebracht. Die beiden Leiterlagen 8, 10 sind durch eine Isolierschicht 9 voneinander elektrisch getrennt.

Im Bereich der Berührungsflächen zwischen den Gehäuseteilen 1, 2 erkennt man die Kontaktstellen 13. Diese Kontaktstellen 13 verbinden die Leiter der flexiblen Leiterplatte 3 und die Leiter der flexiblen Leiterplatte 4 miteinander. Die Anzahl der Kontaktflächen 13 wird z.B. durch die Anzahl der Leiter in den flexiblen Leiterplatten 3, 4 bestimmt. Ist beispielsweise für jede flexible Leiterplatte 3, 4 jeweils nur ein Leiter vorgesehen, der durch sämtliche vorhandenen Leiterlagen 8, 10 geschleift ist, dann ist prinzipiell nur eine Kontaktstelle 13 erforderlich. Werden aber mehrere Leiter parallel pro Leiterlage 8, 10, geführt oder einzelnen oder Gruppen einzelner Leiterlagen 8, 10, jeweils ein Leiter zugeordnet, dann erhöht sich die Anzahl der benötigten Kontaktstellen 13. Bei geringeren Sicherheitsanforderungen kann auf die Kontaktstellen 13 gänzlich verzichtet werden. In diesem Fall ist jedem Gehäuseteil 1, 2 mindestens ein von den anderen Gehäuseteilen getrennter Leiter zugeordnet.

Bei erhöhten Sicherheitsanforderungen kann die Anzahl der Kontaktstellen 13 bewußt erhöht werden. Die Leiter werden dann mehrmals von einer Leiterplatte 3 zur anderen Leiterplatte 4 und umgekehrt geschleift. Werden die Kontaktstellen 13 in beliebigen Abständen zueinander auf den gesamten Berührungsflächen verteilt, dann ergibt sich ein umlaufender Öffnungsschutz; d.h. es wird stets mindestens ein Kontakt zwischen den Leitern der Leiterplatten 3, 4 unterbrochen, egal an welcher Stelle ein Betrüger versucht, durch Aufhebeln der Berührungsflächen in das Gehäuse 1, 2 zu gelangen.

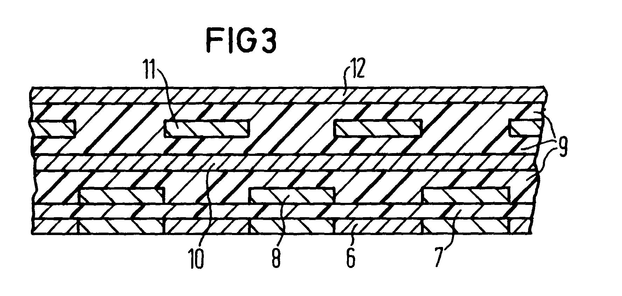

In FIG 3 ist ein Schnitt durch die flexible Leiterplatte 3, 4 mit fünf Leiterlagen 6, 8, 10, 11, 12 dargestellt. Die Schirmlage 6 ist auf einer Seite der Trägerfolie 7 aufgebracht. Auf der anderen Seite der Trägerfolie 7 sind die mäanderförmig mit senkrechter Vorzugsrichtung in die Tafelebene verlaufenden Leiter der ersten Leiterlage 8 zu erkennen. Die Leiter sämtlicher Leiterlagen 8, 10, 11, 12 haben beispielsweise eine Breite von 0,3 mm und einen Abstand von ebenfalls 0,3 mm voneinander. Die erste Leiterlage 8 wird von der Isolierschicht 9 überdeckt. Auf der Isolierschicht 9 verlaufen die Leiter der zweiten Leiterlage 10 in Mäanderform und mit einer Vorzugsrichtung parallel zur Tafelebene. Nach einer weiteren Isolierschicht 9 folgt eine dritte Leiterlage 11, in der die ebenfalls mäanderförmig verlaufenden Leiter wie in der ersten Leiterlage 8 in die Tafelebene hinein verlaufen. Man erkennt dabei die versetzte Anordnung der Leiter der dritten Leiterlage 11 zu den Leitern der ersten Leiterlage 8. Da die Leiter in den unterschiedlichen Leiterlagen 8, 10, 11, 12 gleiche Breite aufweisen und die Leiterbreite in etwa dem Abstand zwischen den Leitern innerhalb einer Leiterlage 8, 10, 11, 12 entspricht, ist es einfach, die Leiter in der dritten Leiterlage 11 genau über den Stellen der ersten Leiterlage 8 anzuordnen, an denen sich dort die leiterfreien Bereiche befinden. Dieses Prinzip ist auch bei den geradzahligen Leiterlagen 10, 12 realisiert. Die Leiter einer vierten Leiterlage 12 verlaufen ebenso wie die Leiter der zweiten Leiterlage 10 parallel zur Tafelebene aber um eine Leiterbreite versetzt zu den dortigen Leitern.

Die dem Schutz gegen unbefugten Zugriff auf das Gerät dienenden elektrischen Leiter sind also in vier Schichten übereinander mäanderförmig und unterschiedlich ausgerichtet so geführt, daß ein Durchdringen der flexiblen Leiterplatte 3, 4 ohne Beschädigen mindestens eines Leiters vollkommen unmöglich erscheint.

Die Leiterlage 6 mit gekreuzten Leitern auf der anderen Seite der Trägerfolie 7 dient einerseits der Abschirmung des Gerätes gegen elektromagnetische Beeinträchtigungen. Andererseits wird durch die Gitterstruktur, deren einzelne Leiter sich deckungsgleich über den Leiter mindestens einer der anderen Leiterlagen 8, 10, 11, 12 befinden, ein Ausspähen der Leiterführung dieser Leiterlagen 8, 10, 11, 12 zusätzlich verhindert.

Zur weiteren Erhöhung der Sicherheit ist es möglich, in jeder Leiterebene mehrere galvanisch voneinander getrennte Leiter parallel zueinander zu führen. Diese einzelnen parallel geführten Leiter einer Ebene können dann mit beliebigen einzelnen parallel geführten Leitern einer anderen Leiterebene 8, 10, 11, 12 verbunden werden. Eine örtliche Zuordnung der Leiter zu einem bestimmten Ort im Gehäuse erscheint dann unmöglich. Ein Betrüger würde beim Versuch in das Gehäuse 1, 2 einzudringen, mehrere Leiter unterbrechen oder beschädigen müssen.

Eine besondere Ausgestaltung des Leitermaterials eröffnet eine weitere Möglichkeit der Sicherheitserhöhung. Bei Verwendung eines Leitermaterials mit definiertem spezifischen Widerstand - beispielsweise einem Leitlack - kann bei Verwendung einer entsprechend ausgerüsteten Auswerteschaltung jede Widerstandsänderung im Leiter, beispielsweise durch Leiterbeschädigung oder Leiterüberbrückung, erkannt werden.

Eine solche Auswerteschaltung ist beispielsweise Bestandteil einer im Gerätegehäuse 1, 2 angeordneten Flachbaugruppe. Diese Flachbaugruppe ist z.B. über lose eingelegte Kontaktelemente mit den Leitern der flexiblen Leiterplatte 3, 4 elektrisch verbunden. Dadurch führt ein Öffnen oder Deformieren des Gehäuses ebenfalls quasi zu einer Unterbrechung der elektrischen Leiter.

Durch die Überwachung der Leiter erhält die erfindungsgemäße Auswerteschaltung jedoch nur ein Schutzkriterium. Weitere Schutzkriterien sind die Versorgungsspannung der sicherheitsrelevanten Schaltungsteile des Gerätes, die Temperatur des Gehäuses und die Temperatur der sicherheitsrelevanten Schaltungsteile. Die sicherheitsrelevanten Schaltungsteile sind beispielsweise ein Halbleiterdatenspeicher und die Auswertewerteschaltung selbst. Elektronische Schaltungen sind nur in bestimmten Spannungs- und Temperaturbereichen funktionsfähig, wodurch sich eine Manipulationsmöglichkeit bei bestimmten Spannungen und Temperaturen ergibt. Vor Erreichen solcher unzulässiger Spannungen, Temperaturen und beim Durchtrennen oder Beschädigen der elektrischen Leiter zerstört die Auswerteschaltung sicherheitsrelevante Schaltungsteile und/oder verändert oder löscht sicherheitsrelevante Daten.

Bei niedrigen Temperaturen verlängert sich die Zeit, die notwendig ist, um die Daten in einem Halbleiterspeicher zu verändern. Diesem Effekt wirkt die Auswerteschaltung dadurch entgegen, daß sie die Versorgungsspannung am Halbleiterspeicher im Falle der Nichteinhaltung der vorgegebenen Bedingungen umpolt. Soll bei diesem Umpolen verhindert werden, daß der Halbleiterspeicher zerstört wird, kann dies durch einen Schutzwiderstand in den Versorgungsspannungsleitungen des Speichers erreicht werden.

## Patentansprüche

1. Schutzvorrichtung gegen Ausspähung und Veränderung von Schaltungsteilen und/oder Daten in einem elektrotechnischen Gerät, das von einem Gehäuse und von mindestens einem elektrischen Leiter umgeben ist, die einen unbefugten Zugriff auf das Gerät durch Überwachung des mindestens einen elektrischen Leiters erkennt und infolgedessen vorhandene Speicherinhalte löscht oder unbrauchbar macht, **gekennzeichnet durch** die Führung des elektrischen Leiters in Mäanderform in mindestens zwei Leiterlagen (8,10,11,12) übereinander und durch eine unterschiedliche Ausrichtung der Leiter in den geradzahligen Leiterlagen (10,12) zu den Leitern in den ungeradzahligen Leiterlagen (8,11).

2. Schutzvorrichtung nach Anspruch 1, **gekennzeichnet durch** eine versetzte Anordnung des Leiters in den aufeinanderfolgenden geradzahligen (10,12) bzw. ungeradzahligen (8,11) Leiterlagen, so daß der Leiter in einer Leiterlage (8,10) genau über den Stellen der darüber oder darunter liegenden geradzahligen bzw. ungeradzahligen Leiterlage (11,12), an denen Sich dort die leiterfreien Bereiche befinden, verläuft.

3. Schutzvorrichtung nach einem der Ansprüche 1 oder 2, **gekennzeichnet durch** eine Serienschaltung der Leiter von mindestens zwei Leiterlagen (8,10,11, 12).

4. Schutzvorrichtung nach einem der vorhergehenden Ansprüche, **gekennzeichnet durch** mindestens zwei parallel geführte Leiter pro Leiterlage (8,10,11,12).

5. Schutzvorrichtung nach einem der vorhergehenden Ansprüche, **dadurch gekennzeichnet,** daß der bzw. die Leiter aus einem Leitermaterial mit einem definierten spezifischen Widerstand besteht bzw. bestehen.

6. Schutzvorrichtung nach einem der vorhergehenden Ansprüche, **gekennzeichnet durch** einen schichtartigen Aufbau der Leiterlagen (8,10,11,12), bei dem zwischen jeder Leiterlage (8,10,11,12) eine Isolierschicht (9) vorgesehen ist.

7. Schutzvorrichtung nach Anspruch 6, **gekennzeichnet durch** eine Anordnung der Leiterlagen (8,10,11,12) und der Isolierschichten (9) auf einer Trägerfolie (7).

8. Schutzvorrichtung nach Anspruch 7, **dadurch gekennzeichnet**, daß eine aus Trägerfolie (7), Leiterlagen (8,10,11,12) und Isolierschichten (9) bestehende Leiterplatte (3,4) auf der Gehäuseinnenfläche befestigt ist.

9. Schutzvorrichtung nach einem der vorhergehenden Ansprüche, **gekennzeichnet durch** ein mehrteiliges Gehäuse (1,2), bei dem die Berührungsflächen zwischen den einzelnen Gehäuseteilen (1,2) von den Leiterlagen (8,10,11,12) der einzelnen Gehäuseteile überdeckt sind.

10. Schutzvorrichtung nach Anspruch 9, **gekennzeichnet durch** im Bereich der Berührungsstellen zwischen den einzelnen Gehäuseteilen (1,2) vorgesehene Kontaktstellen (13) zur Verbindung der Leiter zwischenden einzelnen Gehäuseteilen (1,2).

11. Schutzvorrichtung nach einem der vorhergehenden Ansprüche, **gekennzeichnet durch** eine Leiterlage (6) mit gekreuzten Leitern, die mit Masse verbunden ist.

12. Schutzvorrichtung nach mindestens einem der vorhergehenden Ansprüche, **gekennzeichnet durch** eine Auswerteschaltung, die
- mit dem/den elektrischen Leitern verbunden ist,
- die Versorgungsspannung zumindest der sicherheitsrelevanten Schaltungsteile des Gerätes überwacht,
- die Temperatur des Gehäuses und der sicherheitsrelevanten Schaltungsteile überwacht,
- die Nichteinhaltung von vorgegebenen Bedingungen erkennt und infolge dessen die sicherheitsrelevanten Schaltungsteile zerstört und/oder die sicherheitsrelevanten Daten verändert oder löscht.

13. Schutzvorrichtung nach Anspruch 12, **gekennzeichnet durch** ein Umpolen der Versorgungsspannung des die sicherheitsrelevanten Daten enthaltenden Speichers durch die Auswerteschaltung im Falle der Nichteinhaltung der vorgegebenen Bedingungen.

14. Schutzvorrichtung nach Anspruch 13, **gekennzeichnet durch** einen Schutzwiderstand in den Versorgungsspannungsleitungen des Speichers.

## Claims

1. Safety guard to prevent illicit viewing and alteration of circuit components and/or data in an electrotechnical apparatus which is surrounded by a housing and by at least one electrical conductor, which guard detects unauthorized access to the apparatus by monitoring the at least one electrical conductor and as a result erases or renders unusable existing memory contents, characterized by routing of the electrical conductor in a meandering form in at least two conductor layers (8, 10, 11, 12) one over the other and by a different alignment of the conductors in the even-numbered conductor layers (10, 12) in comparison with the conductors in the odd-numbered conductor layers (8, 11).

2. Safety guard according to Claim 1, characterized by an offset arrangement of the conductor in the successive even-numbered (10, 12) or odd-numbered (8, 11) conductor layers, so that the conductor in one conductor layer (8, 10) runs exactly over those locations of the even-numbered or odd-numbered conductor layer (11, 12) lying above it or below it at which the conductor-free regions are situated.

3. Safety guard according to one of Claims 1 or 2, characterized by a series connection of the conductors of at least two conductor layers (8, 10, 11, 12).

4. Safety guard according to one of the preceding claims, characterized by at least two parallel-routed conductors per conductor layer (8, 10, 11, 12).

5. Safety guard according to one of the preceding claims, characterized in that the conductor or conductors consists or consist of a conductor material of a defined resistivity.

6. Safety guard according to one of the preceding claims, characterized by a stacked arrangement of the conductor layers (8, 10, 11, 12), in which an insulating layer (9) is provided between each conductor layer (8, 10, 11, 12).

7. Safety guard according to Claim 6, characterized by an arrangement of the conductor layers (8, 10, 11, 12) and the insulating layers (9) on a carrier sheet (7).

8. Safety guard according to Claim 7, characterized in that a circuit board (3, 4) comprising carrier sheet (7), conductor layers (8, 10, 11, 12) and insulating layers (9) is fastened on the inner surface of the housing.

9. Safety guard according to one of the preceding claims, characterized by a multipart housing (1, 2), in which the contact surfaces between the individual housing parts (1, 2) are covered by the conductor layers (8, 10, 11, 12) of the individual housing parts.

10. Safety guard according to Claim 9, characterized by electrical contact points (13), provided in the region of the contact locations between the individual housing parts (1, 2), for connecting the conductors between the individual housing parts (1, 2).

11. Safety guard according to one of the preceding claims, characterized by a conductor layer (6) with crossed conductors, which is connected to earth.

12. Safety guard according to at least one of the preceding claims, characterized by an evaluation circuit which
- is connected to the electrical conductor/s,
- monitors the supply voltage of at least the circuit components of the apparatus which are relevant to security,
- monitors the temperature of the housing and of the circuit components relevant to security,
- detects non-compliance with predetermined conditions and as a result destroys the circuit components relevant to security and/or alters or erases the data relevant to security.

13. Safety guard according to Claim 12, characterized by a polarity reversal of the supply voltage of the memory containing the data relevant to security by the evaluation circuit in the event of non-compliance with the predetermined conditions.

14. Safety guard according to Claim 13, characterized by a protective resistor in the supply voltage lines of the memory.

## Revendications

1. Dispositif de sécurité destiné à empêcher d'épier et de modifier des éléments de circuits et/ou des données dans un appareil électrotechnique qui est entouré d'un boîtier et d'au moins un conducteur électrique, dispositif qui détecte un accès non autorisé à l'appareil en surveillant le - au moins un - conducteur électrique et, en réponse, efface ou rend inutilisable les contenus de mémoires existants, caractérisé par le passage en forme de méandres du conducteur électrique dans au moins deux couches conductrices superposées (8, 10, 11, 12) et par une orientation des conducteurs contenus dans les couches conductrices de rang pair (10, 12) différente de celle des conducteurs contenus dans les couches conductrices de rang impair (8, 11).

2. Dispositif de sécurité selon la revendication 1, caractérisé par une disposition décalée du conducteur dans les couches conductrices successives de rang pair (10, 12) resp. de rang impair (8, 11), de sorte que le conducteur contenu dans une couche conductrice (8, 10) passe juste au-dessus des endroits de la couche conductrice de rang pair resp. de rang impair (11, 12) superposée ou sous-jacente, dans lesquels se trouvent les régions exemptes de conducteurs.

3. Dispositif de sécurité selon l'une des revendications 1 ou 2, caractérisé par une connexion en série des conducteurs d'au moins deux couches conductrices (8, 10, 11, 12).

4. Dispositif de sécurité selon l'une des revendications précédentes, caractérisé par au moins deux conducteurs disposés parallèlement dans chaque couche conductrice (8, 10, 11, 12).

5. Dispositif de sécurité selon l'une des revendications précédentes, caractérisé en ce que le conducteur resp. les conducteurs est resp. sont composé(s) d'une matière conductrice ayant une résistance spécifique définie.

6. Dispositif de sécurité selon l'une des revendications précédentes, caractérisé par une construction stratifiée des couches conductrices (8, 10, 11, 12) dans laquelle entre chaque couche conductrice (8, 10, 11, 12) une couche isolante (9) est prévue.

7. Dispositif de sécurité selon la revendication 6, caractérisé par une disposition des couches conductrices (8, 10, 11, 12) et des couches isolantes (9) sur une feuille support (7).

8. Dispositif de sécurité selon la revendication 7, caractérisé en ce qu'une plaque conductrice (3, 4) composée d'une feuille support (7), de couches conductrices (8, 10, 11, 12) et de couches isolantes (9) est fixée sur la surface intérieure du boîtier.

9. Dispositif de sécurité selon l'une des revendications précédentes, caractérisé par un boîtier (1, 2) en plusieurs parties, dans lequel les surfaces de contact mécanique entre les parties élémentaires (1, 2) du boîtier sont recouvertes par les couches conductrices (8, 10, 11, 12) des parties élémentaires du boîtier.

10. Dispositif de sécurité selon la revendication 9, caractérisé par des zones de contact électrique (13) prévues dans la région des zones de contact mécanique entre les parties élémentaires (1, 2) du boîtier, pour connecter les uns aux autres les conducteurs des parties élémentaires (1, 2) du boîtier.

11. Dispositif de sécurité selon l'une des revendications précédentes, caractérisé par une couche conductrice (6) comportant des conducteurs croisés qui sont connectés à la masse.

12. Dispositif de sécurité selon au moins une des revendications précédentes, caractérisé par un circuit d'analyse qui
- est connecté au/aux conducteur(s) électrique(s),
- surveille la tension d'alimentation d'au moins les éléments de circuit de l'appareil qui sont soumis à des conditions de sécurité,
- surveille la température du boîtier et des éléments du circuit qui sont soumis à des conditions de sécurité,
- détecte le non respect de conditions prédéterminées et, à la suite de cette détection, détruit les éléments du circuit qui sont soumis à des conditions de sécurité et/ou modifie ou efface les données qui sont soumis à des conditions de sécurité.

13. Dispositif de sécurité selon la revendication 12, caractérisé par une inversion de la polarité de la tension d'alimentation de la mémoire contenant les données soumises à des conditions de sécurité, par le circuit d'analyse en cas de non respect des conditions prédéterminées.

14. Dispositif de sécurité selon la revendication 13, caractérisé par une résistance de protection intercalée dans les conducteurs de la tension d'alimentation de la mémoire.
